# EUROPEAN PATENT SPECIFICATION

(11) **EP 1 378 561 B1**
(45) Date of publication and mention of the grant of the patent: **30.04.2008**
(21) Application number: 03253662.5
(22) Date of filing: 10.06.2003
(51) Int. Cl.: C10M 141/12, C10M 163/00

(54) **Use of a dispersed hydrated sodium borate composition to inhibit gear damage**
Verwendung einer Zusammensetzung eines dispergierten hydrierten Natriumborats zwecks Vermeidung von Getriebebeschädigungen
Utilisation d'une composition comprenant une dispersion de borate de sodium hydraté pour prevenir les dommages des engrenages

(30) Priority: 28.06.2002 US 187188
(43) Date of publication of application: 07.01.2004
(73) Proprietor: Chevron Oronite Company LLC, San Ramon, CA 94583-2324 (US)
(72) Inventor: Harrison, James J., Novato, California 94947 (US); Buitrago, Juan A., Pinole, California 94564 (US); Nelson, Kenneth D., Clear Lake, California 95422 (US)
(74) Representative: Nash, David Allan

(56) References cited:
- EP-A- 0 976 813
- EP-A- 1 298 188
- WO-A-00/63324
- US-A- 3 853 772
- US-A- 3 997 454
- US-A- 4 089 790

## Description

### Field of the Invention

This invention is directed, in part, to a method for reducing wear and metal fatigue during high temperature operation of a gear set.

### References

The following references are cited in this application as superscript numbers:
¹ Peeler, US-A-3313727, *Alkali Metal Borate E.P. Lubricants,* issued April 11, 1967
² Adams, US-A-3912643, *Lubricant Containing Neutralized Alkali Metal Borates,* issued October 14, 1975
³ Sims, US-A-3819521, *Lubricant Containing Dispersed Borate and a Polyol,* issued June 25, 1974
⁴ Adams, US-A-3853772, *Lubricant Containing Alkali Metal Borate Dispersed with a Mixture of Dispersants*, issued December 10, 1974
⁵ Adams, US-A-3997454, *Lubricant Containing Potassium Borate,* issued December 14, 1976
⁶ Adams, US-A-4089790, *Synergistic Combinations of Hydrated Potassium Borate, Antiwear Agents, and Organic Sulfide Antioxidants,* issued May 16, 1978
⁷ Adams, US-A-4163729, *Synergistic Combinations of Hydrated Potassium Borate, Antiwear Agents, and Organic Sulfide Antioxidants,* issued August 7, 1979
⁸ Frost, US-A-4263155, *Lubricant Composition Containing an Alkali Metal Borate and Stabilizing Oil-Soluble Acid,* issued April 21, 1981
⁹ Frost, US-A-4401580, *Lubricant Composition Containing an Alkali Metal Borate and an Ester-Polyol Compound,* issued August 30, 1983
¹⁰ Frost, US-A-447288, *Lubricant Composition Containing an Alkali Metal Borate and an Oil-Soluble Amine Salt of a Phosphorus Compound,* issued September 18, 1984
¹¹ Clark, US-A-4584873, *Automotive Friction Reducing Composition,* issued August 13, 1985
¹² Brewster, US-A-3489619, *Heat Transfer and Quench Oil,* issued January 13, 1970.
13 Salentine, US-A-4717490, *Synergistic Combination of Alkali Metal Borates, Sulfur Compounds, Phosphites and Neutralized Phosphate,* issued January 5, 1988

### State of the Art

High load conditions often occur in gear sets such as those used in automobile transmissions and differentials, pneumatic tools, gas compressors, centrifuges, high-pressure hydraulic systems, metal working and similar devices, as well as in many types of bearings. When employed in such environments, it is conventional to add an extreme-pressure (E.P.) agent to the lubricant composition and, in this regard, alkali metal borates are well known extreme-pressure agents for such compositions.^{1-11,13}

E.P. agents are added to lubricants to prevent destructive metal-to-metal contact in the lubrication of moving surfaces. While under normal conditions termed "hydrodynamic", a film of lubricant is maintained between the relatively moving surfaces governed by lubricant parameters, and principally viscosity. However, when load is increased, clearance between the surfaces is reduced, or when speeds of moving surfaces are such that the film of oil cannot be maintained, the condition of "boundary lubrication" is reached; governed largely by the parameters of the contacting surfaces. At still more severe conditions, significant destructive contact manifests itself in various forms such as wear and metal fatigue as measured by ridging and pitting.

It is the role of E.P. additives to prevent this from happening. For the most part, E.P. agents have been oil soluble or easily dispersed as a stable dispersion in the oil, and largely have been organic compounds chemically reacted to contain sulfur, halogen (principally chlorine), phosphorous, carboxyl, or carboxylate salt groups which react with the metal surface under boundary lubrication conditions. Stable dispersions of hydrated metal borates have also been found to be effective E.P. agents.

Gear sets have been subject to ever increasing demands including requirements for satisfactory performance at high temperatures, e.g., greater than 135°C and preferably at least 163°C. In turn, this has placed an ever increasing requirement that the E.P. lubricant composition employed in such gear sets provide satisfactory wear and metal fatigue as measured by ridging and pitting requirements of the gear set when evaluated at such high temperatures.

In addition, because hydrated alkali metal borates are insoluble in lubricant oil media, it is necessary to incorporate the borate as a dispersion in the oil and homogenous dispersions are particularly desirable. The degree of formation of a homogenous dispersion can be correlated to the turbidity of the oil after addition of the hydrated alkali metal borate with higher turbidity correlating to less homogenous dispersions. In order to facilitate formation of such a homogenous dispersion, it is conventional to include a dispersant in such compositions. Examples of dispersants include lipophilic surface-active agents such as alkenyl succinimides or other nitrogen containing dispersants as well as alkenyl succinates. ^{1-4, 12} It is also conventional to employ the alkali metal borate at particle sizes of less than 1 micron in order to facilitate the formation of the homogenous dispersion¹¹.

In EP-A-0976813 high synchromesh durability performance and gear protection of a manual transmission gear box is provided by adding to gear box a lubricating oil composition having improved water stability and oxidation control. The lubricating oil composition comprises a base oil of lubricating viscosity, an alkali-metal borate, an organic polysulfide, an alkyl succinic acid ester of a polyol, and an overbased sulfurized alkyl or alkenyl salicylate.

In view of the above, lubricant compositions comprising a hydrated alkali metal borate and which possessed low turbidity and acceptable wear and fatigue properties as measured by pitting and ridging, especially when the gear set is operated at high temperature, would be particularly advantageous.

### SUMMARY OF THE INVENTION

This invention is directed to the novel and unexpected discovery that reduced wear and fatigue as measured by ridging and pitting in gear sets can be achieved by the use of a lubricant composition comprising a dispersed hydrated sodium borate.

In addition, this invention is directed to the novel and unexpected discovery that these compositions exhibit acceptable turbidity as evidenced by a turbidity value of no more than 300 ntu.

Accordingly, in one of its method aspects, this invention is directed to a method for inhibiting gear damage, as measured by reduced wear and metal fatigue associated with ridging and pitting, during operation of a gear set at a temperature of at least 163°C which method comprises operating said gear set with a dispersed hydrated sodium borate composition comprising:
a hydrated sodium borate,
a dispersant,
optionally a detergent, and
an oil of lubricating viscosity,
wherein the dispersed hydrated sodium borate composition is characterized by a sodium to boron ratio of from about 1:2.75 to 1:3.25 and a hydroxyl to boron ratio of from about 0.7:1 to 1-8:1.

When said gear set is operated at a temperature of, e.g., 163°C over at least 8 hours, and preferably at least 16 hours, reduced gear damage, as measured by gear wear and pitting is observed..

Preferably, the dispersed, hydrated sodium borate is further characterized by a hydroxyl to boron ratio of from about 0.8:1 to 1.6:1.

In another preferred embodiment, the dispersed, hydrated sodium borate compositions described herein have a turbidity of less than about 75 ntu, more preferably, less than about 60 ntu, and still more preferably, less than about 40 ntu.

In still another preferred embodiment, the dispersed, hydrated sodium borate composition has a sodium to boron metal ratio of from about 1:2.9 to about 1:3.1 and more preferably about 1:3.

In yet another preferred embodiment, the dispersed, hydrated sodium borate has an average particle size of less than about 0.6 microns and more preferably from about 0.10 to about 0.30 microns.

Optionally, the dispersed, hydrated sodium borate compositions contain small amounts of a water-soluble oxo anion. Only from 0.001 moles to 0.11 moles of water soluble oxo anion should be present per mole of boron atom. This water-soluble oxo anion can include nitrate, sulfate, carbonate, phosphate, pyrophosphate, silicate, aluminate, germanate, stannate, zincate, plumbate, titanate, molybdate, tungstate, vanadate, niobate, tantalate, uranates, or can include the isopolymolybdates and isopolytungstates, or the heteropolymolybdates and heteropolytungstates, or mixtures thereof.

Preferably the dispersant in said sodium borate compositions is selected from the group consisting of a polyalkylene succinimide, a polyalkylene succinic anhydride, a polyalkylene succinic acid, a mono- or di-salt of a polyalkylene succinic acid and mixtures thereof. Preferably, the dispersed, hydrated sodium borate composition contains a detergent such as a metal sulfonate, preferably an alkylaromatic or polyisobutenyl calcium sulfonate or other Group II metal sulfonates that acts in these compositions to help provide for a homogeneous dispersion.

The finished lubricant composition comprising the dispersed, hydrated sodium borate composition is typically derived by serial dilution. First the dispersed, hydrated sodium borate composition is diluted to form an additive package comprising from about 10 to 80 weight percent of the dispersed hydrated sodium borate composition and from about 90 to 20 weight percent of one or more of conventional additives selected from the group consisting of ashless dispersants (0-10%), detergents (0-5%), sulfurized hydrocarbons (0-40%), dialkyl hydrogen , phosphates (0-15%), zinc dithiophosphates (0-20%), alkyl ammonium phosphates and/or thio- dithiophosphates (0-20%), phosphites (0 to 10%), fatty acid esters of polyalcohols such as pentaerythritol monooleate (0-10%), 2,5-dimercaptothiadiazole (0-5%), benzotriazole (0-5%), dispersed molybdenum disulfide (0-5%), foam inhibitors (0-2%), and imidazolines (0-10%) and the like wherein each weight percent is based on the total weight of the composition.

Second, the additive package can be added in effective amounts to an oil of lubricating viscosity to form a finished lubricant composition. Accordingly, the finished lubricant compositions of this invention contain the additive packages as described above upon further blending with an oil of lubricating viscosity. Preferably, the additive package described above, in an amount of from about 2 to 15 weight percent, is added to an oil of lubricating viscosity, in the amount of from about 85 to 98 weight percent, to provide for the finished gear lubricant composition wherein the weight percent of each component is based on the total weight of the composition. More preferably, added along with the oil of lubricating viscosity is a viscosity index improver which is included at a level of 0-12% and/or a pour point depressant at a level of 0-1%, to form a finished oil wherein the weight percent of each of the viscosity index improver and pour point depressant is based on the total weight of the composition.

### DETAILED DESCRIPTION OF THE INVENTION

This invention is directed, in part, to methods for inhibiting gear damage, as measured by reduced wear and metal fatigue associated with ridging and pitting, during high temperature operation of a gear set. Such methods comprise operating the gear set with a dispersed hydrated sodium borate composition comprising:
a hydrated sodium borate,
a dispersant,
optionally a detergent, and
an oil of lubricating viscosity,
wherein the dispersed sodium borate composition is characterized by a sodium to boron ratio of from about 1:2.75 to 1:3.25 and a hydroxyl to boron ratio of from about 0.7:1 to 1.8:1..

Each of these components employed in the claimed methods will be described in detail herein. However, prior to such a description, the following terms will first be defined.

The term "hydroxyl:boron ratio" or "OH:B" refers to a ratio of the number of hydroxyl groups attached to boron (moles of hydroxyl groups per mole of boron) in the dispersed hydrated sodium borate compositions as exemplified by, for example, structural formula I below. Another way to define the term "hydroxyl:boron ratio" is to consider the formula:

Na₂O•*x*B₂O₃•*y*H₂O

where *x* is between 2.75 and 3.25 and *y* is between 1.375 and 6.50, wherein the ratio of *y* to *x* is from about 0.7:1 to 1.8:1; and preferably from about 0.8:1 to 1.6:1; this ratio of *y* to *x* is the "hydroxyl:boron ratio".

For the purposes of this application, the OH:B ratio of a hydrated sodium borate is calculated from the maximum infra-red (IR) absorbance between 3800 and 3250 cm⁻¹ (corrected by subtracting the baseline which is taken to be the absorbance at 3900 cm⁻¹) of a 5.000% solution, in a 0.215mm transmittance cell, of the dispersed hydrated sodium borate composition in an oil of lubricating viscosity wherein all interfering absorbances due to other compounds or impurities have been subtracted. The remaining absorbance in this range corresponds to the hydroxyl groups of the dispersed sodium borate which is then converted to OH:B as follows:

OH:B = 21.OAₘₐₓ/%B

where Aₘₐₓ is the baseline corrected maximum IR absorbance (peak height)in the region 3800-3250 cm⁻¹; and
%B is the percent boron in the original (non-diluted) dispersed sodium borate sample.

The absorbance in this range, 3800 to 3250 cm⁻¹, corresponds to the hydroxyl groups of the sodium borate complex. If other additives are added to mask or interfere with the absorbance within this preferred range such groups will be subtracted from the IR spectra in the initial calculation of the OH:B ratio calculation.

In the examples below, this absorbance was measured with a Nicolet 5DXB FTIR Spectrometer fitted with a DTGS detector and CsI beam splitter. The spectrometer had CaF2 windows with 0.215 mm Teflon® spacer with small section cut out and a suitable cell holder. A spectrum of the sample was obtained using a 4 cm⁻¹ resolution.

As prepared and prior to dilution to form the additive package or the finished lubricant composition (as described above), the dispersed hydrated sodium borate composition preferably includes those compositions comprising from about 10 to 75 weight percent of the hydrated sodium borate; from about 5 to 20 weight percent of a dispersant; and from about 30 to 70 weight percent of an oil of lubricating viscosity, all based on the total weight of the composition. More preferably, the composition further comprises from about 1 to 5 weight percent of a detergent, again based on the total weight of the composition.

### HYDRATED SODIUM BORATE

Dispersed, hydrated sodium metal borates are well known in the art. Representative patents disclosing suitable borates and methods of manufacture include: US-A-3313727; US-A-3819521; US-A-3853772; US-A-3912643; US-A-3997454; and US-A-4089790.¹⁻⁶

These sodium metal borates can generally be represented by the following theoretical structural formula 1: 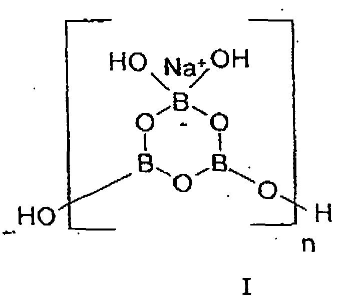 where n is a number preferably from 1.0 to about 10.

In the compositions of this invention, the specific ratio of sodium to boron is limited to a range from about 1:2.75 to 1:3.25.

Dispersed alkali metal borate compositions comprising hydrated sodium metal borates are generally prepared by forming, in deionized water, a solution of sodium hydroxide and boric acid optionally in the presence of a small amount of sodium carbonate. The solution is then added to a lubricant composition comprising an oil of lubricating viscosity, a dispersant and any optional additives to be included therein (e.g., a detergent, sulfur containing compounds such as 2,2'-thiodiethanol, and the like, and other optional addives) to form an emulsion that is then dehydrated. Dehydration proceeds in three steps including an initial step of water removal that is initiated at a temperature of slightly over 100°C. This initial step is followed by a slow increase in temperature whereupon the emulsion changes from turbid to clear. In the final step, there is a rapid increase in temperature and the liquid once again becomes turbid.

Formation of the dispersed, hydrated sodium borates described herein is achieved by stoichiometric selection of the appropriate amounts of sodium hydroxide and boric acid and control of the extent of dehydration such that the resulting product has ratio of sodium to boron range from about 1:2.75 to 1:3.25 and a ratio of hydroxyl to boron of from about from about 0.7:1 to 1.8:1; and preferably from about 0.8:1 to 1.6:1.

Because of their retention of hydroxyl groups on the borate complex, these complexes are referred to as "hydrated sodium borates" and compositions containing oil/water emulsions of these hydrated sodium borates are referred to as "dispersed hydrated sodium borate compositions".

As stated above, the dehydration of the reaction mixture is monitored to ensure that the resulting dispersed hydrated sodium borate composition has a most preferred hydroxyl to boron ratio of about 0.8:1 to 1.6:1 when the reaction mixture is ultimately returned to a temperature of about 0°C to about 50° C and more preferably from about 20°C to 45 °C. Dispersed hydrated sodium borate compositions having such hydroxyl to boron ratios possess improved water tolerability as compared to similar compositions having ratios outside this range. See, for example, U.S. Serial No. 09/967,050, filed on September 28, 2001 (published as US 6,534,450 B1) and entitled "DISPERSED HYDRATED SODIUM BORATE COMPOSITIONS HAVING IMPROVED PROPERTIES IN LUBRICATING OIL COMPOSITIONS".

In addition, related to a method aspect of the present invention, the dehydration procedure is carefully controlled (i.e., using a slower dehydration rate, employing a sweep gas, and the like) in order to avoid condensation of water on the walls of the reaction chamber. Condensation can result in water droplets in the lubricant composition that, in turn, may lead to undesired precipitate formation. Such precipitate formation typically results in large particles that must be filtered from the composition. Accordingly, in a preferred embodiment of this invention, dehydration occurs over a period of from about 1 to 10 hours, more preferably 3 to 8 hours. Optimization of the time, temperature and rate of air flow gives the preferred reaction design.

Preferred dispersed hydrated sodium borate compositions have a sodium-to-boron ratio of about 1:2.75 to 1:3.25 and more preferably 1:2.9 to about 1:3.1, and even more preferably about 1:3. In another of its preferred embodiments, the hydrated sodium borate particles generally have a mean particle size of less than 1 micron. In this regard, it has been found that the dispersed sodium borate compositions of this invention preferably have a particle size where 90% or greater of the particles are less than 0.6 microns.

In the dispersed hydrated sodium borate compositions, the hydrated sodium borates will generally comprise about 10 to 75 weight percent, preferably 25 to 50 weight percent, more preferably about 35 to 40 weight percent of the composition. (Unless otherwise stated, all percentages are in weight percent.)

Optionally, the dispersed sodium borate compositions contain small amounts of a water soluble oxo anion. Only from 0.001 moles to 0.11 moles of water soluble oxo anion should be present per mole of boron atom. This water-soluble oxo anion can include nitrate, sulfate, carbonate, phosphate, pyrophosphate, silicate, aluminate, germanate, stannate, zincate, plumbate, titanate, molybdate, tungstate, vanadate, niobate, tantalate, uranates, or can include the isopolymolybdates and isopolytungstates, or the heteropolymolybdates and heteropolytungstates, or mixtures thereof.

The presence of small amounts of water soluble oxo anions in the sodium borate lubricants is thought to improve the water tolerance of the sodium borates by disrupting the crystal structure of the hydrolysis products. This results in a lower tendency to form crystals or in a reduced rate of crystallization.

The lubricant compositions of this invention can further employ surfactants, detergents, other dispersants and other conditions as described below and known to those skilled in the art including, for example, an alkylaromatic or polyisobutenyl sulfonate.

The dispersed hydrated sodium borate compositions of this invention generally comprise a dispersant, detergent and oil of lubricating viscosity that are further detailed below.

### THE DISPERSANT

The dispersant employed in the compositions of this invention can be ashless dispersants such as an alkenyl succinimide, an alkenyl succinic anhydride, an alkenyl succinate ester, and the like, or mixtures of such dispersants.

Ashless dispersants are broadly divided into several groups. One such group is directed to copolymers which contain a carboxylate ester with one or more additional polar function, including amine, amide, imine, imide, hydroxyl carboxyl, and the like. These products can be prepared by copolymerization of long chain alkyl acrylates or methacrylates with monomers of the above function. Such groups include alkyl methacrylate-vinyl pyrrolidinone copolymers, alkyl methacrylate-dialkylaminoethyl methacrylate copolymers and the like. Additionally, high molecular weight amides and polyamides or esters and polyesters such as tetraethylene pentamine, polyvinyl polysterarates and other polystearamides may be employed. Preferred dispersants are N-substituted long chain alkenyl succinimides.

Alkenyl succinimides are usually derived from the reaction of alkenyl succinic acid or anhydride and alkylene polyamines. These compounds are generally considered to have the formula 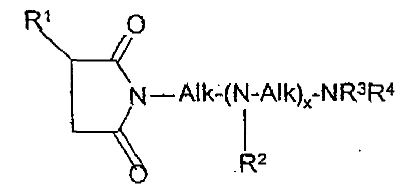 wherein R¹ is a substantially hydrocarbon radical having a molecular weight from about 400 to 3000, that is, R¹ is a hydrocarbyl radical, preferably an alkenyl radical, containing about 30 to about 200 carbon atoms; Alk is an alkylene radical of 2 to 10, preferably 2 to 6, carbon atoms, R², R³, and R⁴ are selected from a C₁-C₄ alkyl or alkoxy or hydrogen, preferably hydrogen, and x is an integer from 0 to 10, preferably 0 to 3. The actual reaction product of alkylene succinic acid or anhydride and alkylene polyamine will comprise the mixture of compounds including succinamic acids and succinimides. However, it is customary to designate this reaction product as a succinimide of the described formula, since this will be a principal component of the mixture. See, for example, US-A-3202678; US-A-3024237; and US-A-3172892.

These N-substituted alkenyl succinimides can be prepared by reacting maleic anhydride with an olefinic hydrocarbon followed by reacting the resulting alkenyl succinic anhydride with the alkylene polyamine. The R¹ radical of the above formula, that is, the alkenyl radical, is preferably derived from a polymer prepared from an olefin monomer containing from 2 to 5 carbon atoms. Thus, the alkenyl radical is obtained by polymerizing an olefin containing from 2 to 5 carbon atoms to form a hydrocarbon having a molecular weight ranging from about 400 to 3000. Such olefin monomers are exemplified by ethylene, propylene, 1-butene, 2-butene, isobutene, and mixtures thereof.

The preferred polyalkylene amines used to prepare the succinimides are of the formula: 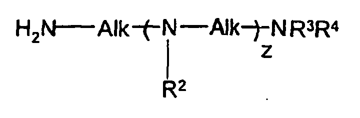 wherein z is an integer of from 0 to 10 and Alk, R², R³, and R⁴ are as defined above.

The alkylene amines include principally methylene amines, ethylene amines, butylene amines, propylene amines, pentylene amines, hexylene amines, heptylene amines, octylene amines, other polymethylene amines and also the cyclic and the higher homologs of such amines as piperazine and amino alkyl-substituted piperazines. They are exemplified specifically by ethylene diamine, triethylene tetraamine, propylene diamine, decamethyl diamine, octamethylene diamine, diheptamethylene triamine, tripropylene tetraamine, tetraethylene pentamine, trimethylene diamine, pentaethylene hexamine, ditrimethylene triamine, 2-heptyl-3-(2-aminopropyl)-imidazoline, 4-methyl imidazoline, N,N-dimethyl-1,3-propane diamine, 1,3-bis(2-aminoethyl)imidazoline, 1-(2-aminopropyl)-piperazine, 1,4-bis(2-aminoethyl)piperazine and 2-methyl-1-(2-aminobutyl)piperazine. Higher homologs such as are obtained by condensing two or more of the above-illustrated alkylene amines likewise are useful.

The ethylene amines are especially useful. They are described in some detail under the heading "Ethylene Amines" in Encyclopedia of Chemical Technology, Kirk-Othrner, Vol. 5, pp. 898-905 (Interscience Publishers, New York, 1950).

The term "ethylene amine" is used in a generic sense to denote a class of polyamines conforming for the most part to the structure

H₂N(CH₂CH₂NH)ₐH

wherein a is an integer from 1 to 10.

Thus, it includes, for example, ethylene diamine, diethylene triamine, triethylene tetraamine, tetraethylene pentamine, pentaethylene hexamine, and the like.

Also included within the term "alkenyl succinimides" are post-treated succinimides such as post-treatment processes involving ethylene carbonate disclosed by Wollenberg, et al., US-A-4612132; Wollenberg, et al., US-A-4746446; and the like as well as other post-treatment processes.

Preferably, the polyalkylene succinimide component comprises from 2 to 40 weight percent, more preferably 5 to 20 weight percent, and even more preferably 10 to 15 weight percent of the weight of the dispersed, hydrated sodium composition.

Polyalkylene succinic anhydrides or a non-nitrogen containing derivative of the polyalkylene succinic anhydride (such as succinic acids, Group I and/or Group II mono- or di-metal salts of succinic acids, succininate esters formed by the reaction of a polyalkylene succinic anhydride, acid chloride or other derivative with an alcohol, and the like) are also suitable dispersants for use in the compositions of this invention.

The polyalkylene succinic anhydride is preferably a polyisobutenyl succinic anhydride. In one preferred embodiment, the polyalkylene succinic anhydride is a polyisobutenyl succinic anhydride having a number average molecular weight of at least 500, more preferably at least 900 to about 3000 and still more preferably from at least about 900 to about 2300.

In another preferred embodiment, a mixture of polyalkylene succinic anhydrides is employed. In this embodiment, the mixture preferably comprises a low molecular weight polyalkylene succinic anhydride component and a high molecular weight polyalkylene succinic anhydride component. More preferably, the low molecular weight component has a number average molecular weight of from about 500 to below 1000 and the high molecular weight component has a number average molecular weight of from 1000 to about 3000. Still more preferably, both the low and high molecular weight components are polyisobutenyl succinic anhydrides. Alternatively, various molecular weights polyalkylene succinic anhydride components can be combined as a dispersant as well as a mixture of the other above referenced dispersants as identified above.

As noted above, the polyalkylene succinic anhydride is the reaction product of a polyalkylene (preferably polyisobutene) with maleic anhydride. One can use conventional polyisobutene, or high methylvinylidene polyisobutene in the preparation of such polyalkylene succinic anhydrides. One can use thermal, chlorination, free radical, acid catalyzed, or any other process in this preparation. Examples of suitable polyalkylene succinic anhydrides are thermal PIBSA (polyisobutenyl succinic anhydride) described in US-A-3361678; chlorination PIBSA described inUS-A-3172892; a mixture of thermal and chlorination PIBSA described in US-A-3912764; high succinic ratio PIBSA described in US-A-4234435; PolyPIBSA described in US-A-5112507 and US-A-5175225; high succinic ratio PolyPIBSA described in US-A-5565528 and US-A-5616668; free radical PIBSA described in US-A-5286799, US-A-5319030, and US-A-5625004; PIBSA made from high methylvinylidene polybutene described in US-A-4152499, US-A-5137978, and US-A-5137980; high succinic ratio PIBSA made from high methylvinylidene polybutene described in European Patent Application Publication No. EP 0 355 895-A2; terpolymer PIBSA described in US-A-5792729; sulfonic acid PIBSA described in US-A-5777025 and European Patent Application Publication No. EP 0 542 380-A1; and purified PIBSA described in US-A-5523417 and European Patent Application Publication No. EP 0 602 863-A1.

Preferably, the polyalkylene succinic anhydride component comprises from 2 to 40 weight percent, more preferably from 5 to 20 weight percent and even more preferably 10 to 15 weight percent of the weight of the dispersed hydrated sodium borate composition.

Typically, in the dispersed hydrated sodium borate composition, the hydrated sodium borate is in a ratio of at least 2:1 relative to the polyalkylene succinic anhydride dispersant, while preferably being in the range of 2:1 to 10:1. In a more preferred embodiment the ratio is at least 5:2. In another preferred embodiment, mixtures as defined above of the polyalkylene succinic anhydrides are employed.

A particularly preferred combination of dispersants includes a mixture of a polyalkylene succinic anhydride and a calcium polyisobutenyl sulfonate, especially those made from highly reactive polyisobutenes. Such mixtures are disclosed, for example, in U.S. Patent Application Serial No. 09/967,049, filed on September 28, 2001 (published as US Patent Application Publication No. US 2003/0073587 A1)and entitled "LUBRICANT COMPOSITION COMPRISING ALKALI METAL BORATE DISPERSED IN A POLYALKYLENE SUCCINIC ANHYDRIDE AND A POLYISOBUTENYL SULFONATE".

### THE DETERGENT

The compositions of the present invention may optionally contain a detergent. There are a number of materials that are suitable as detergents for the purpose of this invention. These materials include phenates (high overbased or low overbased), high overbased phenate stearates, phenolates, salicylates, phosphonates, thiophosphonates and sulfonates and mixtures thereof. As to the above, the overbased phenates, salicylates and sulfonates include both non-borated and borated derivatives well known in the art. Preferably, sulfonates are used, such as high overbased sulfonates, low overbased sulfonates, or phenoxy sulfonates. In addition the sulfonic acids themselves can also be used.

The sulfonate detergent is preferably an alkali or alkaline earth metal salt of a hydrocarbyl sulfonic acid having from 15 to 200 carbons. Preferably the term "sulfonate" encompasses the salts of sulfonic acid derived from petroleum products. Such acids are well known in the art. They can be obtained by treating petroleum products with sulfuric acid or sulfur trioxide. The acids thus obtained are known as petroleum sulfonic acids and the salts as petroleum sulfonates. Most of the petroleum products that become sulfonated contain an oil-solubilizing hydrocarbon group. Also included within the meaning of "sulfonate" are the salts of sulfonic acids of synthetic alkyl aryl compounds. These acids also are prepared by treating an alkyl aryl compound with sulfuric acid or sulfur trioxide. At least one alkyl substituent of the aryl ring is an oil-solubilizing group, as discussed above. The acids thus obtained are known as alkyl aryl sulfonic acids and the salts as alkyl aryl sulfonates. The sulfonates where the alkyl is straight-chain are the well-known linear alkylaryl sulfonates.

The acids obtained by sulfonation are converted to the metal salts by neutralizing with a basic reacting alkali or alkaline earth metal compound to yield the Group I or Group II metal sulfonates. Generally, the acids are neutralized with an alkali metal base. Alkaline earth metal salts are obtained from the alkali metal salt by metathesis. Alternatively, the sulfonic acids can be neutralized directly with an alkaline earth metal base. The sulfonates can then be overbased, although, for purposes of this invention, overbasing is not necessary. Overbased materials and methods of preparing such materials are well known to those skilled in the art. See, for example, LeSuer US-A-3496105, issued Feb. 17, 1970, particularly Cols. 3 and 4.

The sulfonates are present in the lubricating oil composition in the form of alkali and/or alkaline earth metal salts, or mixtures thereof. The alkali metals include lithium, sodium and potassium. The alkaline earth metals include magnesium, calcium and barium, of which the latter two are preferred.

Particularly preferred, however, because of their wide availability, are salts of the petroleum sulfonic acids, particularly the petroleum sulfonic acids which are obtained by sulfonating various hydrocarbon fractions such as lubricating oil fractions and extracts rich in aromatics which are obtained by extracting a hydrocarbon oil with a selective solvent, which extracts may, if desired, be alkylated before sulfonation by reacting them with olefins or alkyl chlorides by means of an alkylation catalyst; organic polysulfonic acids such as benzene disulfonic acid which may or may not be alkylated; and the like.

The preferred salts for use in the present invention are those of alkylated aromatic sulfonic acids in which the alkyl radical or radicals contain at least about 8 carbon atoms, for example from about 8 to 22 carbon atoms. Another preferred group of sulfonate starting materials are the aliphatic-substituted cyclic sulfonic acids in which the aliphatic substituents or substituents contain a total of at least 12 carbon atoms, such as the alkyl aryl sulfonic acids, alkyl cycloaliphatic sulfonic acids, the alkyl heterocyclic sulfonic acids and aliphatic sulfonic acids in which the aliphatic radical or radicals contain a total of at least 12 carbon atoms. Specific examples of these oil-soluble sulfonic acids include petroleum sulfonic acid, petrolatum sulfonic acids, mono- and poly-wax-substituted naphthalene sulfonic acids, substituted sulfonic acids, such as cetyl benzene sulfonic acids, cetyl phenyl sulfonic acids, and the like, aliphatic sulfonic acid, such as paraffin wax sulfonic acids, hydroxy-substituted paraffin wax sulfonic acids, etc., cycloaliphatic sulfonic acids, petroleum naphthalene sulfonic acids, cetyl cyclopentyl sulfonic acid, mono-and poly-wax-substituted cyclohexyl sulfonic acids, and the like. The term "petroleum sulfonic acids" is intended to cover all sulfonic acids that are derived directly from petroleum products.

Typical Group II metal sulfonates suitable for use in this composition include the metal sulfonates exemplified as follows: calcium white oil benzene sulfonate, barium white oil benzene sulfonate, magnesium white oil benzene sulfonate, calcium dipolypropene benzene sulfonate, barium dipolypropene benzene sulfonate, magnesium dipolypropene benzene sulfonate, calcium mahogany petroleum sulfonate, barium mahogany petroleum sulfonate, magnesium mahogany petroleum sulfonate, calcium triacontyl sulfonate, magnesium triacontyl sulfonate, calcium lauryl sulfonate, barium lauryl sulfonate, magnesium lauryl sulfonate, etc. The concentration of metal sulfonate that may be employed may vary over a wide range, depending upon the concentration of sodium borate particles. Generally, however, the concentration may range from 0.2 to about 10 weight percent and preferably from 3 to 7 weight percent. In addition, the compositions of this invention may contain a mixture of both a metal sulfonate and an ashless dispersant, as described above, where the ratio is a factor of achieving the proper stability of the hydrated, dispersed borate composition.

### THE OIL OF LUBRICATING VISCOSITY

The lubricating oil to which the hydrated sodium borates and the dispersant are added can be any hydrocarbon-based lubricating oil or a synthetic base oil stock. Likewise, these lubricating oils can be added to the dispersed sodium borate compositions and additive packages containing them, as described herein, to form finished oil compositions. The hydrocarbon-based lubricating oils may be derived from synthetic or natural sources and may be paraffinic, naphthetic or asphaltenic base, or mixtures
thereof. The diluent oil can be natural or synthetic, and can be different viscosity grades.

The lubricating oil comprises from 30 to 70 weight percent, more preferably from 45 to 55 weight percent, based on the total weight of the dispersed hydrated sodium borate composition.

### FORMULATIONS

The dispersed hydrated sodium borate compositions as described herein above are generally blended to form additive packages comprising such dispersed hydrated sodium borate compositions. These additive packages typically comprise from about 10 to 80 weight percent of the dispersed hydrated sodium borate composition described above and from about 90 to 20 weight percent of one or more of conventional additives selected from the group consisting of ashless dispersants (0-10%), detergents (0-5%), sulfurized hydrocarbons (0-40%), dialkyl hydrogen phosphates (0-15%), zinc dithiophosphates (0-20%), alkyl ammonium phosphates and/or thio- dithiophosphates (0-20%), phosphites (0 to 10%), fatty acid esters of polyalcohols such as pentaerythritol monooleate (0-10%), 2,5-dimercaptothiadiazole (0-5%), benzotriazole (0-5%), dispersed molybdenum disulfide (0-5%), foam inhibitors (0-2%), and imidazolines (0-10%) and the like wherein each weight percent is based on the total weight of the composition.

The fully formulated finished lubricant compositions used in the methods of this invention can be formulated from these additive packages upon further blending with an oil of lubricating viscosity. Preferably, the additive package described above is added to an oil of lubricating viscosity in an amount of from about 2 to 15 weight percent to provide for the finished oil composition wherein the weight percent of the additive package is based on the total weight of the composition. More preferably, added along with the oil of lubricating viscosity is a viscosity index improver which is included at a level of 0-12% and/or a pour point depressant at a level of 0-1%, to form a finished oil wherein the weight percent of each of the viscosity index improver and pour point depressant is based on the total weight of the composition.

A variety of other additives can be present in lubricating oils of the present invention. Those additives include antioxidants, rust inhibitors, friction modifiers, corrosion inhibitors, extreme pressure agents, antifoam agents, other viscosity index improvers, other anti-wear agents, and a variety of other well-known additives in the art.

### EXAMPLES

The invention will be further illustrated by the following examples, which set forth particularly advantageous method embodiments. While the examples are provided to illustrate the present invention, they are not intended to limit it.

As used herein, the following abbreviations have the following meanings. If not defined, the abbreviation will have its art recognized meaning.
g=gram
IR=infra-red
Mg=milligrams
mm=millimeters
NTU or ntu=nephelometric turbidity unit
TBN=total base number

In addition, all percents recited below are weight percents based on the total weight of the composition described unless indicated otherwise.

### EXAMPLE 1

The dispersed hydrated sodium borate compositions used in the methods of this invention generally can be prepared by dehydrating a water-in-oil emulsion of an aqueous solution of sodium hydroxide and boric acid. Preferably a solution is prepared having a boron to sodium ratio of 3 to 1. The aqueous solution is added to a combination of neutral oil, dispersant, and/or a detergent and mixed to form an emulsion. The resulting emulsion is heated to partially dehydrate it. Reduced pressures can also be used and the temperature set accordingly. During dehydration of the emulsion there is an initial period when water is removed from the emulsion at a rapid rate at a constant temperature for example at about 102°C. After this period, nearly all process water has been eliminated and water removed after this stage is due to the dehydration of the hydrated sodium borate. Then the temperature slowly increases and the emulsion changes from turbid to clear. As the degree of dehydration and temperature continue to increase, the resulting liquid will again become turbid. As used in these examples, the following equipment was used to measure the experimental data:
Turbidity: Turbidity of the finished oils was measured, neat, at 20°C using a Hach Ratio Turbidimeter Model: 18900. The turbidimeter was calibrated with 18 and 180 ntu Formazin primary standards.
Total Base Number (TBN): TBN's were measured by ASTM method D2896 using a Brinkmann 682 Titroprocessor.
Particle Size Distribution (PSD): Particle size distributions were measured on a Horiba LA-920 Particle Size Analyzer running Horiba LA-920 software with the relative refractive index set at "126A000I." GC grade n-heptane was used as the dispersant fluid.

### Dispersed hydrated Sodium borate compositions:

Four dispersed hydrated dispersed sodium borate compositions (IA-1D, see Table 1) were prepared by dehydration of oil-in-water emulsions of aqueous sodium borate and dispersant/detergent oil solutions by heating them to 250°F and 270°F over about 1.5 hours and 3.25 hours each. The aqueous solutions were prepared in 2 liter glass beakers by stirring and heating mixtures of: 136.4g of deionized water, 109.8g of 99.5% Boric Acid (EMScience), 46.8g of 50% Sodium Hydroxide in water (VWR), and 0.30g of 99.5% Sodium Carbonate (EMScience), until the boric acid completely dissolved. Oil-in-water emulsions were made by gradually adding the aqueous phase to an oil phase containing: 136.15g of Exxon 150 Neutral oil, a group I base oil, 30.25g of an alkenyl succinate having a molecular weight of about 1100 amu, and 13.25g of a neutral calcium sulfonate having a TBN of about 5mgKOH/g, under a vigorous mixing action. A high shear mixer is preferred to form an emulsion or a micro-emulsion. The emulsions were then dehydrated in a 1-liter stainless steel kettle equipped with a mechanical stirrer, heat mantle, temperature controller, and nitrogen sweep line. The four batches were heated over different lengths of time to approximately 250°F or 270°F, thus determining several different dehydration conditions.

Table 1 contains the OH:B ratio and turbidity data for four preparations of sodium borate dispersions. These preparations were made with different heating rates and final dehydration temperatures. As indicated by the data, samples dehydrated to 250°F (121°C) over about 3 hours and to 270°F (132°C) over about 1.75 hours have lower turbidity than the samples dehydrated to 250°F (121°C) over 1.5 hours and 270°F (132°C) over 3.5 hours. Turbidity and the resulting OH:B ratio are a function of the process conditions undertaken during dehydration.

**Table 1. Process Conditions, Turbidity and OH:B ratio Data**

| Sample | Final Temp, °F(°C) | Time, hours | Turbidity, ntu | OH:B ratio |
|---|---|---|---|---|
| 1A | 250 (121) | 1.5 | 96 | 1.61:1 |
| 1B | 270 (132) | 1.75 | 29 | 0.99:1 |
| 1C | 250 (121) | 3 | 47 | 1.43:1 |
| 1 D | 270 (132) | 3.5 | 66 | 0.81:1 |

### Dehydration monitored by in-situ Infra-red (IR) measurement:

IR data was collected using an *in-situ* probe during the dehydration of an emulsion, prepared in the same manner as examples 1A-D. The kettle was equipped with an *in situ* ReactIR MP mobile IR probe manufactured by Applied Systems Inc.; the probe is a six reflection diamond coated ZnSe ATR element. An IR spectrum was collected every minute using ReactIR software, also manufactured by Applied Systems Inc., so that peak heights/areas could be tracked over the course of the reaction. These peak heights/areas were then plotted over time. Samples were taken at various times during dehydration. Turbidity was measured and OH:B ratio was calculated as shown above. The samples were analyzed for particle size distribution, turbidity, OH:B ratio, and TBN with turbidity and OH:B ratio presented in Table 2.

**Table 2. Turbidity and OH:B Data**

| Sample | Turbidity, ntu | OH:B ratio |
|---|---|---|
| 1E | 200 | 2.18:1 |
| 1F | 77 | 1.57:1 |
| 1G | 24 | 1.38:1 |
| 1H | 14.6 | 1.28:1 |
| 1I | 11.5 | 1.21:1 |
| 1J | 14.6 | 1.10:1 |
| 1K | 20 | 1.02:1 |
| 1L | 34 | 0.91:1 |
| 1M | 51 | 0.84:1 |
| 1N | 62 | 0.72:1 |

Turbidity can be seen to decrease during the course of the dehydration reaction and then increase after passing a minimum. Products prepared by controlling the dehydration endpoint after this point of low turbidity at the elevated dehydration temperature, are seen to approach a minimum turbidity when the OH:B ratio was kept between about 0.8:1 and 1.6:1. The turbidity is low over a specific OH:B range and is a minimum at an OH:B ratio of about 1:1 to about 1.3:1. This minimum inflection can be related to an OH:B ratio range and results in a homogeneous dispersion for the resulting mixture. While it is expected that the dispersant type and additives may affect the shape of the curve, or the specific OH:B ratio values which results in a minimum turbidity, the desired range can determined by the methods herein.

While a point of low turbidity is observed at elevated dehydration temperature, it does not correlate to the point of low turbidity in the dispersed hydrated sodium borate composition at the desired ambient temperature of 0-50°C. To achieve improved turbidity of the dispersed hydrated sodium borate composition at this temperature or at ambient temperature, additional dehydration must continue until the emulsion again becomes turbid. This increment of additional dehydration has been back calculated to achieve the desired results in the emulsion at the temperature of concern.

Continued dehydration after the point of low turbidity, results in a higher turbidity. Continued dehydration will eventually result in precipitation and sedimentation of the borate.

### EXAMPLE 2

Six (6) different dispersed hydrated sodium borate compositions were prepared in a manner similar to Example 1, wherein the calcium sulfonate used was a low overbased calcium sulfonate having a TBN of about 17 mgKOH/g. These compositions had OH:B ratios as follows:
Example 2A: OH:B ratio of 1.0:1.
Example 2B: OH:B ratio of 1.24:1.
Example 2C: OH:B ratio of 1.13:1.
Example 2D. OH:B ratio of 0.91:1.
Example 2E: OH:B ratio of 0.86:1.
Example 2F: OH:B ratio of 0.68:1.

Each of these compositions was formulated into a lubricant composition comprising the following:

97 g of about an 87:13 mixture of 600 N/bright stock oil which further comprised conventional additives. See, for example, Salentine¹³; U.S. Patent No. 4,717,490.

3 g of the dispersed hydrated sodium borate composition of each of Examples 2A-2F, respectively.

The above compositions are referred to herein as "Composition of Example 2A; 2B; 2C; 2D; 2E and 2F", respectively.

A commercially available dispersed hydrated potassium borate (having an OH:B ratio of about 0.8:1 and a K:B ratio of about 1:3) was formulated using the same additives and base stock to provide for a comparative lubricant composition.

This composition is referred to herein as "Comparative Composition".

The above compositions were employed in similar gear sets and these gear sets were then evaluated under identical conditions in a high temperature L-37 test (described by Schlemann, et al., SAE Technical Paper Series 831732) wherein the low speed, high torque operation of this test was conducted for about 16 hours at 163°C. This test measures wear in the gear set as well as the extent of surface fatigue exemplified by ridging and pitting in the gear sets after operation and is construed as a severe test that evaluates the performance of the lubricant composition in inhibiting gear set wear and fatigue. The results of this test are measured on a scale of 0 to 10 where lower numbers reflect more heavy or severe wear and fatigue in the gear sets and higher numbers reflect little or no wear or fatigue.

The results of this evaluation are set forth below:

| | Wear | | Ridging | | Pitting | |
|---|---|---|---|---|---|---|
| | Pinion Gear | Ring Gear | Pinion Gear | Ring Gear | Pinion Gear | Ring Gear |
| Comparative Composition | 3 | 4 | 3 | 3 | 3 | 3 |
| Composition of Ex. 2A | 9 | 9 | 10 | 9 | 10 | 10 |
| Composition of Ex. 2B | 7 | 7 | 8 | 8 | 9.9 | 9.9 |
| Composition of Ex. 2C | 9 | 9 | 6 | 5 | 10 | 10 |
| Composition of Ex. 2D | 7 | 7 | 9 | 10 | 9.9 | 9.9 |
| Composition of Ex. 2E | 7 | 8 | 8 | 8 | 10 | 9.9 |
| Composition of Ex. 2F | 9 | 9 | 8 | 9 | 10 | 10 |

The above data demonstrates that the dispersed hydrated sodium borate compositions employed in this invention significantly inhibit wear and fatigue in gear sets operated at high temperatures, and show a marked improvement over the comparative dispersed hydrated potassium borate composition.

From the foregoing description, various modifications and changes in the above described invention will occur to those skilled in the art. All such modifications coming within the scope of the appended claims are intended to be included therein. For the avoidance of doubt, the invention also relates to a method of operating a gear set with the dispersed hydrated borate composition described herein.

## Claims

1. A method for inhibiting gear damage, as measured by reduced wear and metal fatigue associated with ridging and pitting, during operation of a gear set at a temperature of at least 163°C, which method comprises operating said gear set with a dispersed hydrated sodium borate composition comprising:
(a) a hydrated sodium borate
(b) a dispersant, and
(c) an oil of lubricating viscosity,
wherein the dispersed hydrated sodium borate composition is **characterized by** a sodium to boron mole ratio of from 1:2.75 to 1:3.25 and a hydroxyl to boron mole ratio of from 0.7:1 to 1.8:1

2. The method according to Claim 1,wherein the dispersed hydrated sodium borate has a sodium to boron ratio of from 1:2.9 to 1:3.1

3. The method according to Claim 1, wherein the dispersed hydrated sodium borate has a sodium to boron ratio of about 1:3.

4. The method according to Claim 1, wherein the dispersed hydrated sodium borate has a hydroxyl to boron ratio of from 0.8: 1 to 1.6:1.

5. The method according to Claim 1, wherein said composition further comprises from 0.001 moles to 0.11 moles of a water soluble oxo anion per mole of boron atom.

6. The method according to Claim 5, wherein said water-soluble oxo anion is selected from the group consisting of nitrate, sulfate, carbonate, phosphate, pyrophosphate, silicate, aluminate, germanate, stannate, zincate, plumbate, titanate, molybdate, tungstate, vanadate, niobate, tantalate, uranates, isopolymolybdates, isopolytungstates, heteropoly-mlolybdates, heteropolytungstates, and mixtures thereof.

7. The method according to Claim 1, wherein said dispersant is selected from the group consisting of a polyalkylene succinimide, a polyalkyene succinic anhydride, a polyalkylene succinic acid, a mono- or di-salt of a polyalkylene succinic acid and mixtures thereof.

8. The method according to Claim 1, wherein said composition comprises 2 to 40 weight percent of said dispersant, based upon the total weight of the composition.

9. The method according to Claim 1, wherein said composition further comprises 0.2 to 10 weight percent of a detergent, based upon the total weight of the composition.

10. The use of a dispersed hydrated sodium borate composition which comprises:
(a) a hydratrated sodium borate
(b) a dispersant, and
(c) an oil of lubricating viscosity,
wherein the dispersed hydrated sodium borate composition is **characterized by** a sodium to boron mole ratio of 1:2.75 to 1:3.25 and a hydroxyl to boron mole ratio of from 0.7:1 to 1.8:1 in a gear set lubricating composition for the purpose of inhibiting gear damage, as measure by reduced wear and metal fatigue associated with ridging and pitting, during operation of a gear set at a temperature of at least 163°C.

## Patentansprüche

1. Verfahren zur Verhinderung von Getriebeschaden, gemessen anhand von kleinerem Verschleiß und kleinerer Metallermüdung in Verbindung mit Furchenbildung und Lochfraßkorrosion, beim Betrieb eines Getriebesatzes bei einer Temperatur von mindestens 163°C, wobei das Verfahren das Betreiben des Getriebesatzes mit einer Zusammensetzung mit dispergiertem hydratisiertem Natriumborat umfasst, die folgendes umfasst
(a) ein hydratisiertes Natriumborat
(b) ein Dispergiermittel und
(c) ein Öl mit Schmierviskosität,
wobei die Zusammensetzung mit dispergiertem hydratisiertem Natriumborat durch ein Molverhältnis von Natrium zu Bor von 1:2,75 bis 1:3,25 und ein Molverhältnis von Hydroxyl zu Bor von 0,7:1 bis 1,8:1 **gekennzeichnet** ist.

2. Verfahren nach Anspruch 1, wobei das dispergierte hydratisierte Natriumborat ein Verhältnis von Natrium zu Bor von 1:2,9 bis 1:3,1 hat.

3. Verfahren nach Anspruch 1, wobei das dispergierte hydratisierte Natriumborat ein Verhältnis von Natrium zu Bor von etwa 1:3 hat.

4. Verfahren nach Anspruch 1, wobei das dispergierte hydratisierte Natriumborat ein Verhältnis von Hydroxyl zu Bor von 0,8:1 bis 1,6:1 hat.

5. Verfahren nach Anspruch 1, wobei die Zusammensetzung zudem 0,001 mol bis 0,11 mol eines wasserlöslichen Oxoanions pro mol Boratome umfasst.

6. Verfahren nach Anspruch 5, wobei das wasserlösliche Oxoanion aus der Gruppe ausgewählt ist, die aus Nitrat, Sulfat, Carbonat, Phosphat, Pyrophosphat, Silikat, Aluminat, Germanat, Stannat, Zinkat, Plumbat, Titanat, Molybdat, Wolframat, Vanadat, Niobat, Tantalat, Uranaten, lsopolymolybdaten, lsopolywolframaten, Heteropolymolybdaten, Heteropolywolframaten und deren Gemischen besteht.

7. Verfahren nach Anspruch 1, wobei das Dispergiermittel aus der Gruppe ausgewählt ist, die aus einem Polyalkylensuccinimid, einem Polyalkylenbernsteinsäureanhydrid, einer Polyalkylenbernsteinsäure, einem Mono- oder Disalz einer Polyalkylenbernsteinsäure und deren Gemischen besteht.

8. Verfahren nach Anspruch 1, wobei die Zusammensetzung 2 bis 40 Gew.-% des Dispergiermittels umfasst, bezogen auf das Gesamtgewicht der Zusammensetzung.

9. Verfahren nach Anspruch 1, wobei die Zusammensetzung zudem 0,2 bis 10 Gew.% eines Detergenz umfasst, bezogen auf das Gesamtgewicht der Zusammensetzung.

10. Verwendung einer Zusammensetzung mit dispergiertem hydratisiertem Natriumborat, die folgendes umfasst
(a) ein hydratisiertes Natriumborat
(b) ein Dispergiermittel und
(c) ein Öl mit Schmierviskosität,
wobei die Zusammensetzung mit dispergiertem hydratisiertem Natriumborat durch ein Molverhältnis von Natrium zu Bor von 1:2,75 bis 1:3,25 und ein Molverhältnis von Hydroxyl zu Bor von 0,7:1 bis 1,8:1 **gekennzeichnet** ist, in einer Getriebesatz-Schmierzusammensetzung zur Verhinderung von Getriebeschaden, gemessen anhand von kleinerem Verschleiß und kleinerer Metallermüdung in Verbindung mit Furchenbildung und Lochfraßkorrosion, beim Betrieb eines Getriebesatzes bei einer Temperatur von mindestens 163°C.

## Revendications

1. Procédé d'inhibition d'un endommagement d'engrenages, tel que mesuré au moyen d'une usure réduite et d'une fatigue réduite du métal associées à un striage et à la formation de piqûres, pendant l'actionnement d'un train d'engrenages à une température d'au moins 163 °C, ledit procédé comprenant l'actionnement dudit train d'engrenages avec une composition de borate de sodium hydraté dispersé comprenant :
(a) un borate de sodium hydraté,
(b) un dispersant, et
(c) une huile ayant une viscosité lubrifiante,
dans lequel la composition de borate de sodium hydraté dispersé est **caractérisée par** un rapport molaire du sodium au bore de 1:2,75 à 1:3,25 et par un rapport molaire des groupes hydroxyle au bore de 0,7:1 à 1,8:1.

2. Procédé selon la revendication 1, dans lequel le borate de sodium hydraté dispersé a un rapport du sodium au bore de 1:2,9 à 1:3,1.

3. Procédé selon la revendication 1, dans lequel le borate de sodium hydraté dispersé a un rapport du sodium au bore d'environ 1:3.

4. Procédé selon la revendication 1, dans lequel le borate de sodium hydraté dispersé a un rapport des groupes hydroxyle au bore de 0,8:1 à 1,6:1.

5. Procédé selon la revendication 1, dans lequel ladite composition comprend en outre de 0,001 mole à 0,11 mole d'un anion oxo soluble dans l'eau par mole d'atome de bore.

6. Procédé selon la revendication 5, dans lequel ledit anion oxo soluble dans l'eau est choisi dans l'ensemble constitué de nitrate, sulfate, carbonate, phosphate, pyrophosphate, silicate, aluminate, germanate, stannate, zincate, plombate, titanate, molybdate, tungstate, vanadate, niobate, tantalate, uranates, isopolymolybdates, isopolytungstates, hétéropolymolybdates, hétéropolytungstates et des mélanges de ceux-ci.

7. Procédé selon la revendication 1, dans lequel ledit dispersant est choisi dans l'ensemble constitué d'un polyalkylènesuccinimide, d'un anhydride polyalkylènesuccinique, d'un acide polyalkylènesuccinique, d'un mono- ou di-sel d'un acide polyalkylènesuccinique et des mélanges de ceux-ci.

8. Procédé selon la revendication 1, dans lequel ladite composition comprend de 2 à 40 % en poids dudit dispersant par rapport au poids total de la composition.

9. Procédé selon la revendication 1, dans lequel ladite composition comprend en outre de 0,2 à 10 % en poids d'un détergent par rapport au poids total de la composition.

10. Utilisation d'une composition de borate de sodium hydraté dispersé comprenant :
(a) un borate de sodium hydraté,
(b) un dispersant, et
(c) une huile ayant une viscosité lubrifiante,
dans laquelle la composition de borate de sodium hydraté dispersé est **caractérisée par** un rapport molaire du sodium au bore de 1:2,75 à 1:3,25 et par un rapport molaire des groupes hydroxyle au bore de 0,7:1 à 1,8:1, dans une composition de lubrification d'un train d'engrenages dans le but d'inhiber un endommagement des engrenages, tel que mesuré au moyen d'une usure réduite et d'une fatigue réduite du métal associées à un striage et à la formation de piqûres, pendant l'actionnement d'un train d'engrenages à une température d'au moins 163 °C.
